# EUROPEAN PATENT APPLICATION

(11) **EP 4 781 815 A1**
(43) Date of publication of application: **29.07.2026**
(21) Application number: 26154090.0
(22) Date of filing: 26.01.2026
(51) Int. Cl.: A01G 9/04

(54) **SYSTEM AND METHOD FOR HANDLING PLANTS, COMPRISING AN ASSEMBLY OF A TRAY AND AN INSERT**

(30) Priority: 27.01.2025 NL 2039697
(71) Applicant: Houdstermaatschappij Modiform B.V., 3831 KA Leusden (NL)
(72) Inventor: SMAL, Gerardus Hendrikus, 3831 KA Leusden (NL)
(74) Representative: V.O.

(57) **Abstract**

System for handling plants and/or plant pots, comprising a tray and an insert, wherein the tray is made of plastic and comprises a bottom and two opposite first side walls and two opposite second side walls, first and second side walls meeting at four corners of the tray and defining an upper rim extending along edges of the side walls opposite the bottom wall, wherein the upper rim is provided with at least two first connecting provisions and the insert is provided with at least two second connecting provisions, wherein each first connecting provision is designed for cooperation with one of the second connecting provisions, such that cooperating first and second coupling provisions are prevented from becoming uncoupled by pulling at the insert in a direction parallel to a main plane of the bottom wall, inward to the tray.

## Description

The invention is related to an assembly of a tray and an insert for the storage, handling and transport of goods such as plant pots containing plants. The invention is further related to the use of an assembly of a tray and an insert for the storage, handling and transport of goods such as plant pots containing plants.

In storage, handling and transport of plant pots containing plants it is common practice to use standardized plastic trays for receiving the potted plants. Such trays are for example standardized by NormPack (NP), for example NP200 series, NP300 series or NP400 series and are commonly used in potted plant logistics. The trays are standardized in outer dimensions, in order to fit properly in transport and storage equipment, such as Danish trolleys, auction trolleys, on pallets, in cardboard stacking boxes, and in tray handling equipment. These trays are designed for single use, are made of PS and are available in various configurations, for example for fitting specific pot sizes and numbers of pots and for retaining different volumes of water.

These standardized plant trays are easily recyclable, especially since they are all made of the same material, polystyrene. However, recycling is suboptimal, seen from a perspective of environmental impact, for example because of deterioration of the plastic in each recycling cycle, and because of the energy, water and chemicals needed for the recycling process. Moreover, since each tray is designed for specific pots and uses, a very large number of different types of trays are necessary, even in each standardized series. For users of such trays, such as growers, distributors and retail this poses the problem that different models of trays have to be stored separately, for example in different stacks, in order to be transported to a recycling facility, or for example for returning the trays back to a supplier for recycling.

In order to avoid these problems it has been proposed in EP1004235 to provide a tray with a removable insert. The tray is designed as a relatively shallow dish, having a bottom wall and four side walls extending upward therefrom. The insert is provided with an array of openings for receiving pots of potted plants. A multitude of such inserts can be provided, each fitting in the same tray, but having different arrangements of openings, such that the same tray can be used for various numbers and sizes of pots. In EP1004235 the side walls are provided with a series of columns, which columns each define a support member and a retaining means. In each column a horizontal slit is provided between the relevant support member and retaining means. The inserts are all flat sheets which can be inserted with an edge position into the various slits dispersed at intervals around the periphery of the tray.

These known assemblies of trays and inserts have the advantage that the same tray can be used for various configurations of potted plants to be handled. The trays and inserts can be provided separately, and can be assembled at a first location to form an assembly for receiving pots of potted plants, and disassembled by removing the insert from the tray at a second location, whereafter the trays can be stacked for storage and transport. The inserts can be handled separately, for example for recycling or reuse. During use the support members provide for a predefined height of the insert above the bottom wall of the tray, whereas the retaining means prevent the inserts from upward movement. A disadvantage of this known assembly is that the insert has to be bent three-dimensionally in order to be inserted into the tray, since edge portions at four different sides of the insert have to be pushed into said slits. This makes placing the insert very difficult and time consuming and may lead to damaging of the insert. Furthermore it has been found that when placing pots into the openings of the insert the insert will bend down into the tray, which can lead to pulling edge portions out of one or more of the slits, which may not properly return into the slit when the down force is relieved. Similarly, when pulling pots out of openings of the insert, the insert may be pulled up with the respective pot, especially in a middle section of the insert, which can again lead to pulling edge portions from one or more of the slits, which may not properly return back into the relevant slit or slits when releasing the upward force. A further disadvantage of these known assemblies is that the slits extending between the relevant support and retaining means make manufacturing of the trays complicated, requiring movable parts in the molds for manufacturing the trays by for example injection molding or vacuum forming, making the molds and manufacturing process costly.

There is a need for alternative assemblies of trays and inserts for handling products such as plants and/or plant pots, wherein the same tray can be used with a variety of inserts, retaining the advantages of the assemblies known from EP1004235, diminishing or preferably removing at least one of the disadvantages of these known assemblies. There is a need for an alternative method for handling trays with inserts.

In an aspect an assembly of the present disclosure comprises a tray and an insert, wherein the tray is made of plastic and comprises a bottom and two opposite first side walls and two opposite second side walls, first and second side walls meeting at four corners of the tray and defining an upper rim extending along edges of the side walls opposite the bottom wall. The upper rim is provided with at least two first connecting provisions and the insert is provided with at least two second connecting provisions. Each first connecting provision is designed for cooperation with one of the second connecting provisions, such that cooperating first and second coupling provisions are prevented from becoming uncoupled by pulling at the insert in a direction parallel to a main plane of the bottom wall, inward to the tray.

By designing the first and second connecting provisions such that they will not be uncoupled by pulling inward on the insert, it is easily prevented that the insert becomes dislodged in part or in its entirety from the tray. Similarly to pulling inward on the insert, the connecting provisions will not be uncoupled by pulling outward on the tray wall, thereby preventing the insert from becoming dislodged in part or in its entirety from the tray. It is furthermore prevented that the insert is deformed significantly when placing pots (products) in openings of the insert or when removing them from the openings, ensuring proper support of the pots by the insert. Moreover the insert can be made of relatively light and thin plastic or cardboard, and can be flat, at least initially.

In embodiments the first and second connecting provisions are designed such that the second connecting provisions can be pushed into and/or onto the first connecting provisions in a direction substantially perpendicular to the bottom of the tray.

In such embodiments the insert can be mounted very easily by basically placing it on the tray, for example on the rim, and push it down for connecting the second connecting elements to the first connecting elements.

In embodiments at least a number of the first connecting provisions comprises at least two spaced apart rim portions defining a rim opening there between, wherein relevant second connecting provisions are provided comprising an anchoring element fitting inside the rim opening. The anchoring element has at least one hook portion for engaging an outward facing portion of at least one of the rim portions next to said rim opening.

In the same or different embodiments at least a number of the first connecting provisions comprises at least one upstanding rim portion, wherein relevant second connecting provisions comprise at least one opening fitting over the or each relevant upstanding rim portion, such that a portion of the insert bordering said at least one opening extends along an outside facing side of the upstanding rim portion.

In these embodiments the second connecting elements hook at least partly, seen from inside the tray, behind a portion of a first connecting provision of the tray. Thus they can be coupled easily, and prevent the connecting provisions to become dislodged. Furthermore, the insert is mounted substantially at the very top of the tray, and therefore optimal use is made of distance between the bottom wall of the tray and the support of the pots by the insert. Furthermore, in an assembly of the disclosure the insert need not to be deformed for mounting or removal. Which also enables easy automation of this process.

In embodiments the tray is provided with first connecting provisions at least at two corners, wherein the insert is provided with complementary second connecting provisions at corners of the insert. Preferably first connecting provisions are provided at least at each of the four corners of the tray.

In the same or alternative embodiments the tray is provided with at least one first connecting provision at each rim portion extending along opposite first side walls and/or at each rim portion extending along opposite second side walls, in positions spaced apart from the corners of the tray. At each side of the tray for example one or two or more first connecting provision can be provided, wherein the insert can be provided with a fitting number of second connecting provisions for cooperating with said first connecting provisions.

In embodiments the rim of the tray comprises an inner ledge portion at a side facing inward of the tray, for supporting an edge portion of an insert connected to the tray.

Thus the insert can even better be supported by the tray.

In the same or alternative embodiments the rim can comprise an outer ledge portion at a side facing outward of the tray, defining at least part of a periphery, wherein in coupled condition the second connecting provisions rest at least partly on said outer ledge portion. Preferably the second connecting provisions extend substantially inside the said periphery.

By allowing the second connecting provisions to rest at least partly on the outer ledge portion, a desired connecting position can be more easily defined whereas undesired deformation is largely prevented. By keeping the second connecting provisions within the periphery they are better protected against undesired release, for example when handling the assembly, for example when sliding the tray with the insert mounted along another such tray or for example when placing it into or taking it out of a storage facility or cart or the like.

In advantageous embodiments at least a number of said first connecting provisions comprises an undercut for retaining an edge portion of the insert.

Such undercut may even better secure the insert in position on the tray. Preferably the undercut is provided at an inside facing side of the relevant first connecting provision, wherein the insert edge portion is pulled into and/or below said undercut when connecting the second connecting provision to the first connecting provision.

In an assembly according to the disclosure preferably the insert comprises a series of openings for receiving plants, and/or plant pots, wherein preferably the openings in said series are provided with lips extending into the opening, for at least partly supporting the pots in said openings. In advantageous embodiments the lips are made integral with the insert and/or are pivotally connected at a periphery of said opening.

By providing said lips extending into the opening, which are pushed down when inserting a pot into such opening, providing an additional holding force on the pot. The ends of the lips will engage the pot at a position below the level of the insert, preferably spaced apart above the bottom of the tray, which will further enhance stability. When using such lips the first and second connecting provisions are especially advantageous because it will require a larger down force to place the pots and a larger up force to remove the pots again, which in the known system would lead to much deformation of the insert which would pull the insert out of the slits.

Preferably the lips are connected to the further insert at a periphery of the opening, preferably pivotally, wherein the lips have an end opposite said connection to the further insert which is widening and is provided with an end surface which is curved concavely.

By providing a widening lip with a concave free end of the lips, a surface or line contact between the pot and the lip will be provided which will increase stability of the pot in the tray and insert assembly. Connected should in this respect be understood as including made integral.

In advantageous embodiments the insert is made of plastic or cardboard, more specifically corrugated cardboard. The insert could also be made of corrugated plastic. Preferably the insert is made of water repelling or water resistant cardboard or plastic. To this end for example the cardboard can be waxed. Preferably the insert is substantially flat, at least prior to use, such that the inserts require a minimum of space for storage, whereas the inserts can be easily manufactured, for example by dye cutting from cardboard of plastic sheet or by press forming.

The bottom wall of the tray is preferably provided with indentations, which indentations are designed for guiding and/or retaining water. During use the plant pots inserted into the insert may rest on the bottom wall or may be suspended in the insert. Indentations, such as for example but not limited to ridges and/or channels can further be advantageous in stiffening the tray. For such reason also side walls can be provided with stiffening profiles. Preferably the trays are designed to be nestable for stacking.

In embodiments the bottom wall can be closed, such that water can be retained in the tray. In other embodiments the tray, for example the bottom wall, can be provided with one or more openings, for allowing water to drain from the tray or to enter into the tray. The insert can be closed between the openings for receiving the pots of potted plants. In other embodiments the insert can be provided with openings between the openings for receiving the pots, for example for reducing weight and/or for aeration.

In an assembly according to the disclosure the tray is made of plastic, for example but not limited to by thermoforming, such as vacuum forming, or injection molding, suitable for multiple use cycles. The insert can be made, as described, either reusable, for example made of plastic, or disposable, especially recyclable, for example of cardboard. Obviously appropriate materials can be chosen, wherein plastics used in an assembly of the disclosure can for example be but are not limited to PET or PS.

In exemplary embodiments in a system of the disclosure a series of insert configurations is provided, each insert of said series of inserts being designed with said second connecting provisions for connecting the relevant insert to the tray, for forming an assembly. Inserts in said series comprise differently sized openings and/or different opening configurations. The different opening configurations of the insert can also include different sized openings in the same insert, for example an insert can have at least two different sized openings for receiving two different sized plant pots. Alternatively inserts of a series of inserts can be provided with a large series of small openings or perforations for forming openings, for example for receiving and supporting plant stems. In such assemblies with any insert of said series the same or a similar tray can be used.

In embodiments an insert of an assembly of the disclosure the insert can be provided with a collar, for surrounding plants in pots supported in the insert and tray. The collar can, during use, extend upward from the tray. The collar can for example be an integral part of the insert, or can be attached to the insert.

In this disclosure furthermore an assembly of a tray and an insert is disclosed, wherein the tray is made of plastic and comprises a bottom and two opposite first side walls and two opposite second side walls, first and second side walls meeting at four corners of the tray and defining an upper rim extending along edges of the side walls opposite the bottom wall. The upper rim is provided with an inward reaching ledge, extending at least alongside inner portions of the four corners, and the insert is designed for resting with an edge portion on the inward reaching ledge, whereby the four corners are provided with an undercut facing inward, at a level of the inward reaching ledge, such that a corner portion of the insert can fit in the undercut, such that a cooperating undercut and corner of the insert prevent the corner from being moved upward from the relevant inward reaching ledge portion.

Preferably the or each undercut is provided at a lower side of a rim portion extending upward from the relevant inward reaching ledge portion. The undercut preferably has a height substantially similar to the thickness of the insert, or at least of the relevant corner of said insert, or slightly smaller, such that the relevant corner is, when inserted, is clamped by the undercut. In embodiments each undercut can extend additionally over a length alongside one of more of the sides of the tray. These embodiments can be combined with the first and second coupling elements as described here before.

In a further aspect the present disclosure is directed to a method for handling plants and/or plant pots or similar products. In a method of the disclosure trays are reused, wherein the trays are used for at least transporting the trays with an insert and plants and/or plant pots to a destination, whereafter at least the trays are returned to for example the same or another location for reuse of the tray for transporting plants in inserts. The inserts can either be reused, or can be discarded, preferably for recycling. The trays and/or inserts can be cleaned or otherwise treated before recycling or reuse.

In methods of the disclosure a series of assemblies according to the disclosure is provided, wherein each tray is provided with an insert by connecting the second connecting provisions of the insert with the first connecting provisions of the tray, such that the insert spans an opening of the tray, said opening substantially defined by the rim of the tray. Plants and/or plant pots are inserted into the openings of the insert. Preferably the plants and/or plant pots are inserted after the insert has been placed properly in the tray.

Then the trays with inserts and plants and/or plant pots are transported to a destination, whereby at said destination the plants and/or plant pots are removed by retrieving the plants and/or plant pots from the openings in the insert and the inserts are removed from the trays. Then the trays are stacked. The inserts are also stacked or are removed for recycling or reuse. The stacked trays are transported for reuse, for example to the place of origine or to another location for reuse. The trays and/or inserts can be cleaned or otherwise treated before recycling or reuse, for example prior to stacking and transporting.

By using trays and inserts which can be coupled and separated, it is enabled that the trays and inserts can be used in coupled condition for example for storage and transport of potted plants, whereas the inserts can be separated from the trays, such that the trays can be collected separate from the inserts, for return and reuse. The inserts can be collected separately, for example for recycling or return and reuse. Moreover, the trays can be used with different inserts for handling different arrays of pots and different plants.

The invention will be further elucidated on the basis of exemplary embodiments which are represented in the drawings. The exemplary embodiments are given by way of non-limitative illustration of the invention. In the drawings schematically:
Fig. 1 shows a perspective view of an assembly according to the disclosure, in a first embodiment;
Fig. 2 shows the embodiment of an assembly according to fig. 1, in top view;
Fig. 3A and B show in side view part of an assembly according to fig. 1 and 2, in two embodiments;
Fig. 3C shows in iso-metric view a corner of a tray and assembly according to the disclosure, in a further alternative embodiment
Fig. 4 shows in top view an embodiment of an insert for use in an assembly according to the disclosure, such as for example shown in fig. 1 and 2;
Fig. 5A-D shows a series of embodiments of inserts for use in an assembly according to the disclosure;
Fig. 6 shows a perspective view of an assembly according to the disclosure, in a second embodiment, with a series of pots for plants placed in openings of the insert;
Fig. 7 shows in enlarged view an undercut of a tray according to the disclosure, with part of an insert placed therein;
Fig. 8 shows in top view an embodiment of an insert for use in the second embodiment;
Fig. 9A and Fig. 9B show part of an embodiment of an insert for use in an assembly of the disclosure, with a collar, in flat and in set up position;
Fig. 10A and Fig. 10B show part of an alternative embodiment of an insert for use in an assembly of the disclosure, with a collar, in flat and in set up position;
Fig. 11 shows a perspective view of an assembly according to the disclosure; and
Fig. 12 shows a perspective view of an assembly according to the disclosure.

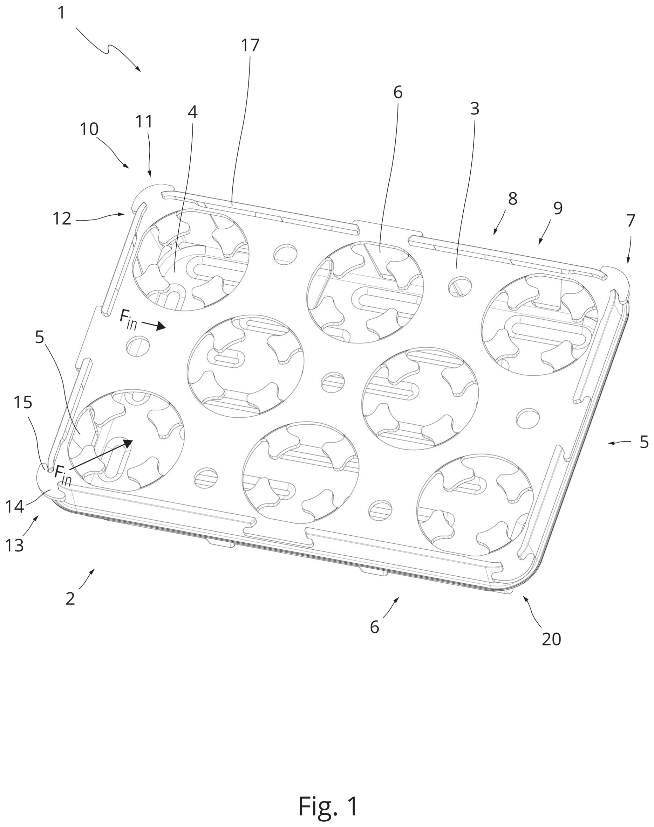

In the following disclosure a system for handling plants and/or plant pots will be described. The system comprises a tray and an insert and various embodiments of said tray and insert will be shown as example in Figures 1-12.

In this description embodiments of the invention will be described with reference to the drawings by way of example only. These embodiments should by no means be understood as limiting the scope of the disclosure. At least all combinations of aspects, elements and features of the embodiments shown and discussed are also considered to have been disclosed herein. In this description the same or similar elements and features will be referred to by the same or similar reference signs. The drawings are not to scale, and can show exaggerations in order to more clearly show features of the claimed invention.

In this description expressions of orientation such as top, bottom, vertical etcetera are used for convenience only and refer to the orientation of the tray as seen in the accompanying drawings, the tray being placed with the bottom on a horizontal surface.

In this description wording like substantially and generally should be understood as meaning that relatively small deviations from the feature or value they refer to are also considered to be covered, for example deviations of 20% or less, such as 15% or less or 10% or less.

In general the disclosure is directed to an assembly of a tray and an insert, or a series of trays and a series of inserts, wherein each insert is detachably connectable to the tray. The trays are designed to be reused, whereas the inserts may be reusable too or can be recycled. The inserts have openings for receiving the goods, especially pots of potted plants. Preferably inserts in a series of inserts have the same outer configuration but comprise a different number and/or different configuration of openings. Furthermore inserts can include differently sized openings to receive different sized plants and/or plant pots. The different inserts can thus be used with the same trays, improving logistics, especially in storage and return of used trays. By separating the inserts from the trays after delivery of the goods, also logistics for the inserts is relatively easy, for return or recycling.

In an assembly of the disclosure when an insert has been properly placed in the tray, the insert will preferably define a main plane P of the insert which will be parallel to the bottom of the tray, wherein the insert preferably is locked by portions of the insert behind portions of the tray, at an outward facing side of said portions of the tray. This has the advantage that the insert cannot be pulled free of the tray when being pulled inward. Such inward pulling force could for example happen when a pot is inserted into an opening in the insert, bending the insert downward, into the volume of the tray, or when pulling a pot out of an opening in the insert, bending the insert upward. Such pushing and/or pulling can for example be the result of friction between pot and insert and/or resistance resulting from fingers or the like, reaching inward into the opening and engaging the pot and/or by tilting the pot during insertion into or retraction from an opening of the insert. Similar to the inward pulling force on the insert, it is also not possible for the insert to be pulled free of the tray when the tray wall is being pulled outward.

Fig. 1 shows a perspective view of an assembly 1 according to the disclosure, in a first embodiment. The system 1 comprises a tray 2 and an insert 3. In this embodiment the tray is made of plastic, such as polystyrene, and is formed by thermoforming, specifically by vacuum forming. The tray comprises a bottom wall 4, two opposite first side walls 5, and two opposite second side walls 6. The first and second side walls 5, 6 meet at four corners 7 of the tray 2 and define an upper rim 8 that extends along the edges 9 of the side walls 5, 6, opposite the bottom wall 4. The upper rim 8 is provided with at least two first connecting provisions 10, embodied as a rim opening 11 defined by at least two spaced apart rim portions 12. The insert 3 is provided with at least two second connecting provisions 13, in this embodiment embodied as an anchoring element 14 that fits at least partly inside the rim opening 11, whereas part of the anchoring element 14 hooks behind at least one of and preferably both of the rim portions 12. The first connecting provision 10 and second connecting provision 13 are designed for cooperation such that the cooperating first and second connecting provision 10, 13 are prevented from becoming uncoupled by pulling at the insert in a direction F parallel to the main plane of the bottom wall 4, inward to the tray 2.

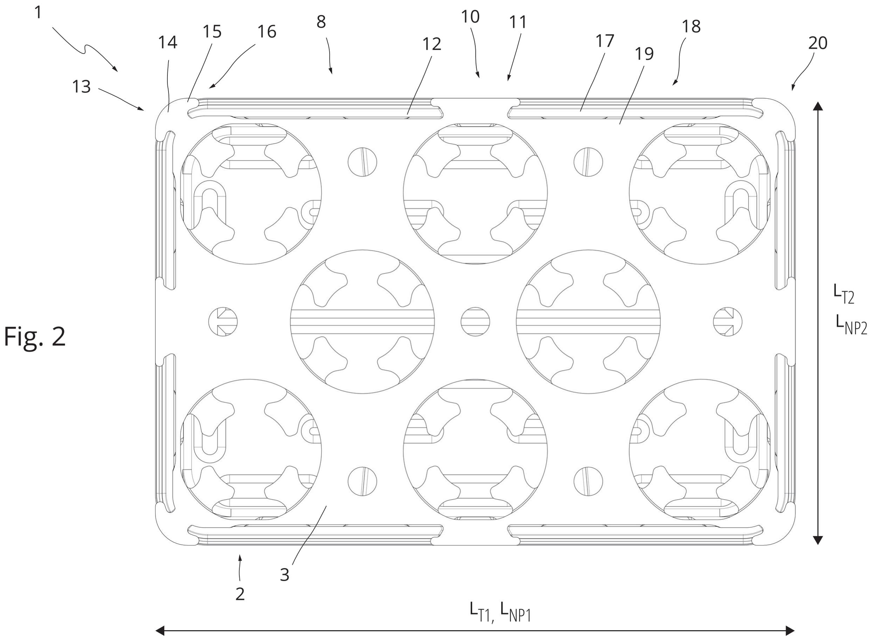

Fig. 2 shows the embodiment of an assembly 1 according to fig. 1, in top view. Fig. 2 clearly shows several spaced apart rim portions 12 which are provided along the upper rim 8, defining several rim openings 11 between two spaced apart rim portions 12. Each rim opening 11 with ends of adjacent rim portions 12 is a first connecting provision 10 that cooperates with a second connecting provision 13 provided on the insert 3.

In the shown embodiment, the second connecting provision 13 is embodied as an anchoring element 14 that fits at least partly inside the rim opening 11. The shown anchoring elements 14 are provided with at least one hook portion 15 for engaging an outward facing portion 16 of at least one of the rim portions 12 next to said rim opening 11. Fig. 2 also shows more clearly that the first and second connecting provisions 10, 13 are designed such that the second connecting provision 13, embodied as an anchoring element 13 can be pushed into the first connecting provision 10, embodied as rim openings 11 defined by the spaced apart rim portions 12. The insert 3 can be pushed in a direction towards the tray 2 and bottom wall 5 of the tray 2, thereby pushing the anchoring elements 14 onto the upper rim 8 into the rim openings 11, coupling the first and second connecting provisions 10, 13.

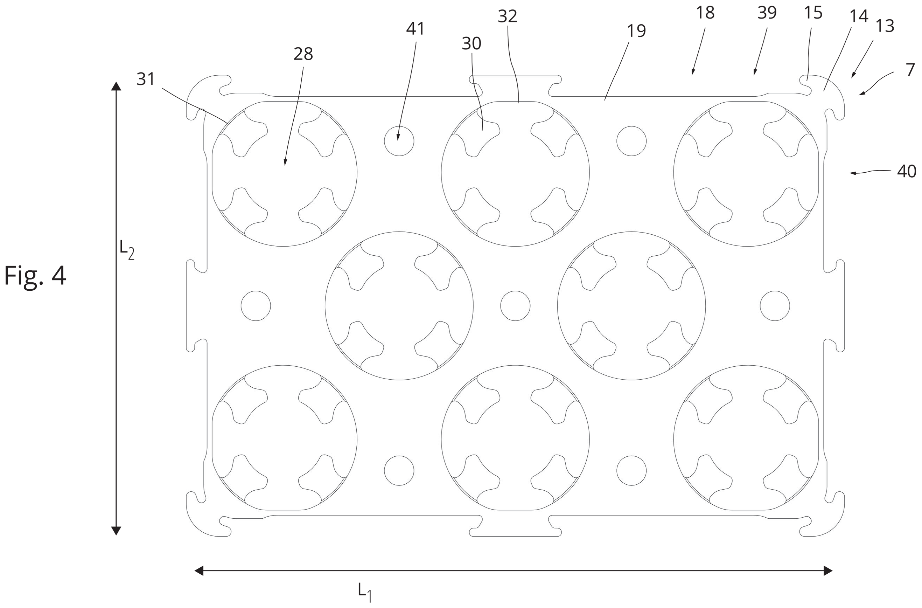

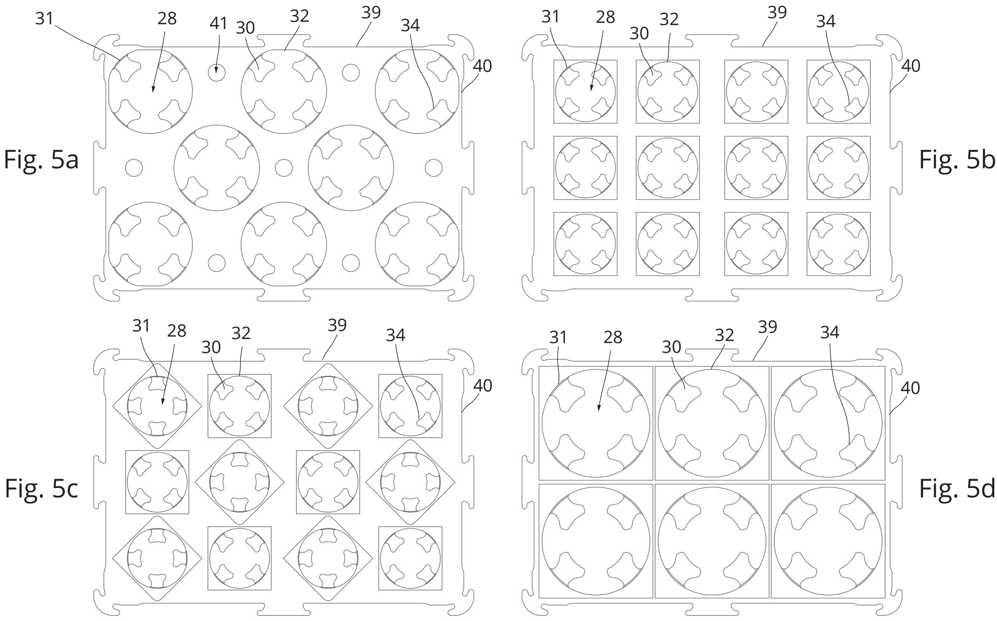

Fig. 1 and 2 also show that at least a number of the first connecting provisions 10 comprise at least one upstanding rim portion 17 shown by the spaced apart rim portion 12. There is a relevant second connecting provision 13 provided on the insert 3 comprising at least one opening 18 that fits over the or each relevant upstanding rim portion 17. The opening 18 is shown more clearly in Fig. 4 and Fig. 5, wherein only the insert 3 is shown without the tray 2. Fig. 2 shows more clearly that the portion 19 of the insert 3 bordering said at least one opening 18 extends along an outside facing side 16 of the upstanding rim portion 17.

Fig. 1 and Fig. 2 show a system 1 wherein the tray 2 is provided with first connecting provisions 10 at each of the four corners 7 of the tray 2, embodied as a rim opening 11. The insert 3 is provided with complementary second connecting provisions 13 at each corner 20 of the insert 3, embodied as an anchoring element 14. Fig. 1 and Fig. 2 also show more clearly how the tray 2 is provided with at least one first connecting provision 10, the rim openings 11 between rim portions 12, that that are provided at opposite first side walls 5 and rim openings 11 that are provided at opposite second side walls 6, in positions spaced apart from the corners 7 of the tray 2. In the shown embodiment there is one rim opening 11 on each side wall 5, 6, that is spaced apart from a corner 7 of the tray 2. It will be clear that more than one such opening 11 can be provided, each opening designed for receiving a corresponding connecting element 14 of the insert.

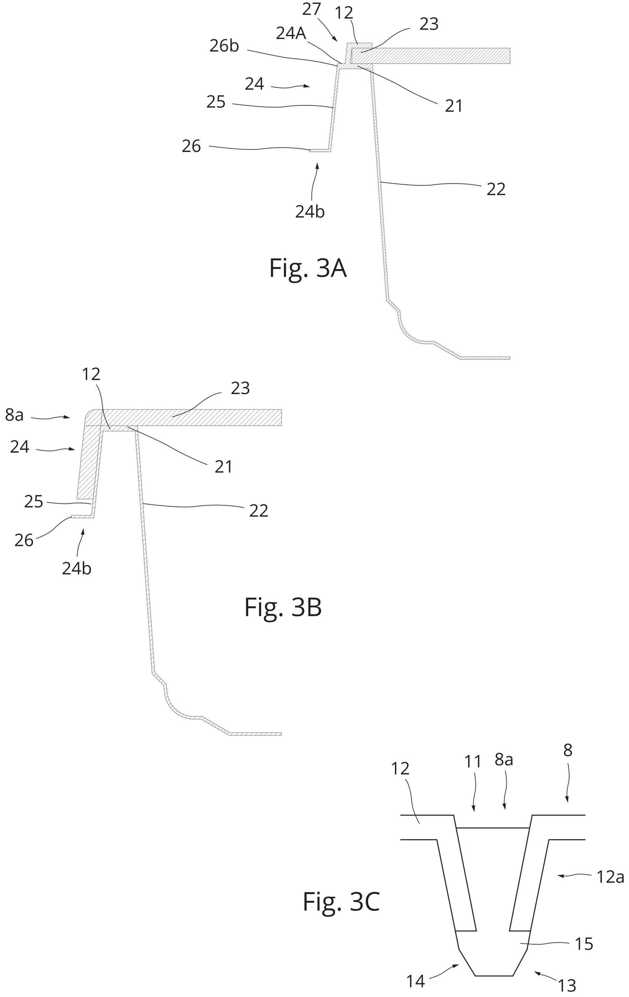

Fig. 3A and Fig. 3B show in side view part of an assembly 1 according to fig. 1 and 2. Fig. 3C shows in iso-metric view an alternative embodiment of a corner of a tray 2 as shown in fig. 3b. Fig. 3A and 3B show an inner ledge portion 21 at a side 22 facing inward of the tray 2. The inner ledge 21 supports an edge portion 23 of the insert 3 that is connected to the tray 2. Fig. 3A and 3B further show an outer ledge portion 24 at a side 25 facing outward of the tray 2, defining a periphery 26.

The periphery 26 is the most outward extending part of the tray 2, and in Fig. 3A and 3B is formed by a small ledge 24b extending from the outer ledge portion 24. In other embodiments, the periphery 26 could also be defined by the outward facing side of a beaded edge. Alternatively, there is no ledge or beaded edge and the periphery 26 is defined by the outward facing side 25 of the tray 2. In the shown embodiments, the periphery 26 of a tray 2 fits the standardized NormPack such as the NP200, NP300, and/or NP400 series, but in alternate embodiments the periphery 26 can be adjusted to fit other standardized measures such as the dimensions of an auction trolley.

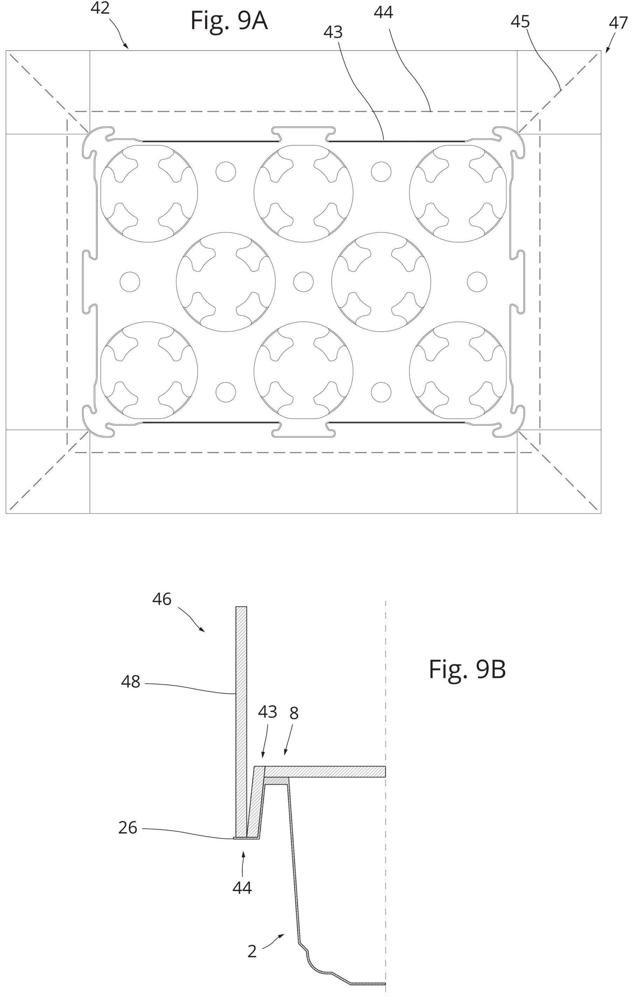

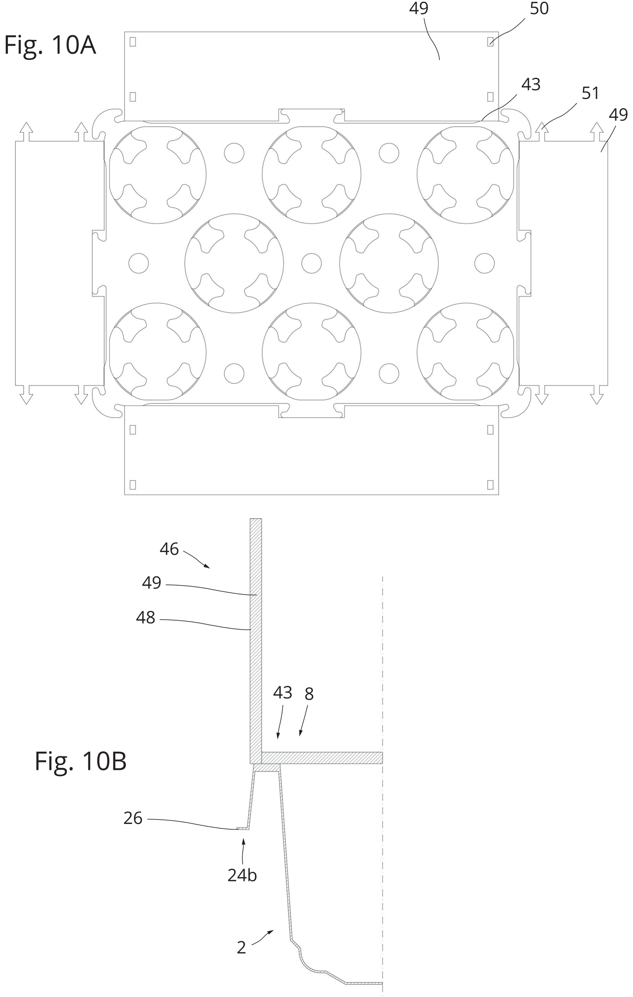

Furthermore in embodiments, the ledge 24b and/or beaded edge could be used as a support for a collar (not shown) for surrounding the plants and/or plant pots. In an embodiment, the collar could be an integral part of the insert, as shown in Fig. 9A and Fig. 10A, but it could also be a loose collar surrounding the tray 2 and resting on the ledge 24b and/or beaded edge, within the periphery 26.

Upstanding rim portion 12 can be provided or can provide directly above the level of the inner ledge 21 an undercut 27 in which an outer part of the edge portion 23 resting on the ledge 21 can be received, like a snap provision, preventing easy lifting of the edge portion 23 from the inner ledge 21. In a similar manner additionally or alternatively rim portions 12 can be provided with such undercuts 27 at facing sides of a relevant opening 11, such that edges of the second connecting elements 14 can be received therein. Again like a snap provision, for further securing the connecting elements 14 and hence the insert. All or some of the openings 11 can be provided with such undercuts 27.

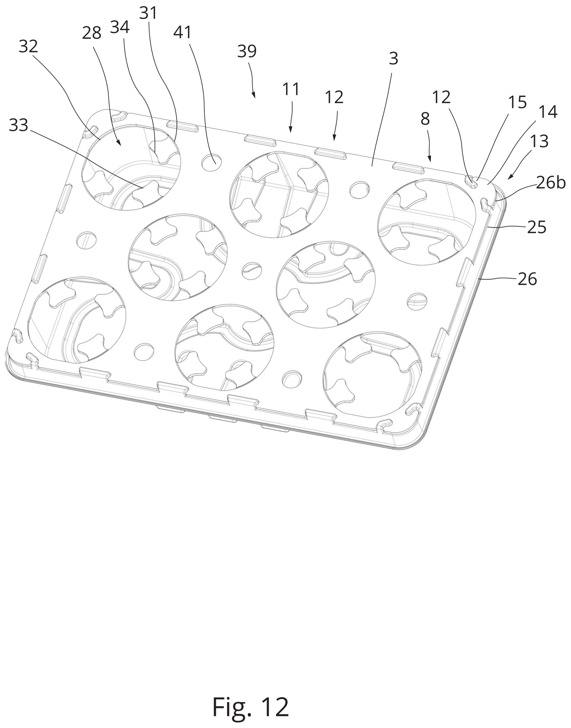

Fig. 3A also shows a substantially horizontal outer ledge portion 24a. The most outward extending edge of the substantially horizontal outer ledge portion 24a forms a periphery 26b of the upper rim 8. In an embodiment, the second connecting provision 13 does not extend beyond the periphery 26b. Fig. 12 shows an embodiment in which the second connecting provision 13, embodied as an anchoring element 14 does not extend beyond the periphery 26b.

Fig. 3a and 3b also show a substantially horizontal outer ledge portion 24a. The most outward extending edge of the substantially horizontal outer ledge portion 24a forms a periphery 26b of the upper rim 8. In an embodiment, the second connecting provision 13 does not extend beyond the periphery 26b. Fig. 12 shows an embodiment in which the second connecting provision 13, embodied as an anchoring element 14 does not extend beyond the periphery 26b. Thus undesired release of the connecting portions 13 can further be avoided.

In embodiments where the collar is used which is not integrally connected to the insert, it may be beneficial for the second connecting provision 13, more specifically the anchoring element 14 with the hook portion 15 to be within the periphery 26b of a substantially horizontal outer ledge portion 24a as shown in the embodiment of Fig. 12, or for example be folded downward as shown in fig. 3c, allowing for the collar to more closely surround the tray 2 while remaining within the boundary formed by the periphery 26.

In the embodiment of fig 1 and 2, the second connecting provision 13, such as the connecting element 14, extends through the opening 11, such that a hook portion 15 rests at least partly on the outer ledge portion 24. In this embodiment the second connecting elements 13 extend in the same plane P as the further insert, which plane P can be referred to as a main plane of the insert, extending parallel to a main plane P_{b} of the tray. The insert preferably is substantially flat, at least initial, at least along the outer periphery thereof.

In the embodiment as schematically shown in fig. 3B the second connecting provision 13 is bent downward, along an outside surface 8A of the upper rim 8, enclosing an angle with the plane P. In such embodiments the rim portions 12 can at least partly extend on or from said surface 8A, or be defined by said surface 8A, such that longitudinal ends 12A thereof face outward and downward. The hook portions 15 of the connecting element 14 can hook behind these longitudinal ends 12A, as schematically shown in fig. 3c. In such embodiment the connecting elements 14 can be relatively long, without extending outside a periphery of the tray 1. Moreover any force Fᵢₙ can be absorbed even better, further preventing release of the insert 2 from the tray 1. Fig 3C, shows the embodiment of Fig 3B from a perspective view facing the bent downward second connecting provision 13. The second connecting provision 13 is bent around the surface 8a of the upper rim 8. The second connecting provision 13 comprises an anchoring element 14 with hook portions 15 that engages the longitudinal ends 12A of the rim portions 12, securing the insert 3 into place.

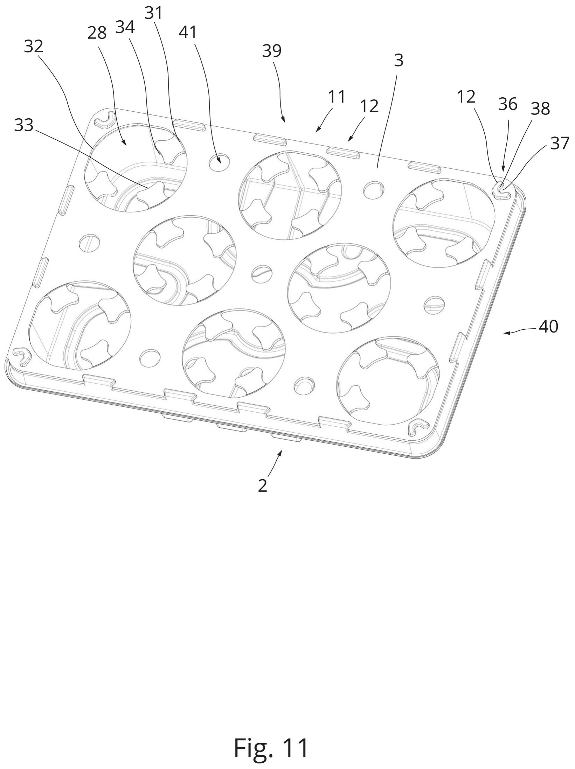

In a still further embodiment, as shown for example in fig. 11, the second connecting element 13, 14 can be formed or provided with an opening 36 such as a hole or slit, which can be pushed over a rim portion 12 extending upward from the further rim, like a post or nub or the like. A part 37 of the insert 3 surrounding part of the opening 36 can thus hook behind an outside facing portion 38 of the rim portion 12, again preventing the insert 3 from being pulled away from the tray 2 by pulling in an inward direction F. The rim portion 12 can again be provided with undercut 27, for preventing upward movement of the insert 2.

In another embodiment, as shown for example in Fig. 12, the first and second connecting elements 10, 13 are again formed such that both connecting elements 10, 13 are within the periphery 26 of the tray, more specifically within the boundary of periphery 26b formed by the substantially horizontal outer ledge portion 24a. This is more clearly shown in the connecting elements 10, 13 at the corners, wherein the anchoring element 13 and rim portions 12 are shaped differently to prevent both connecting elements from extending beyond the upper rim 8. As stated before this could be beneficial for applying a separate collar around the tray 2, to surround plant pots.

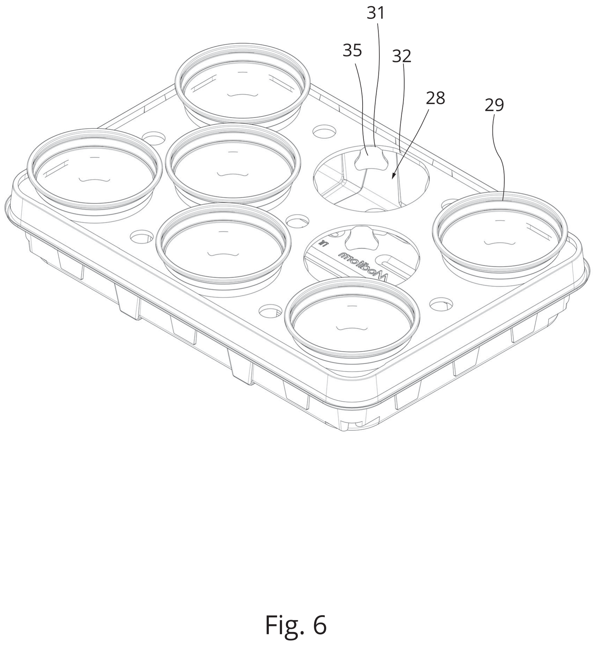

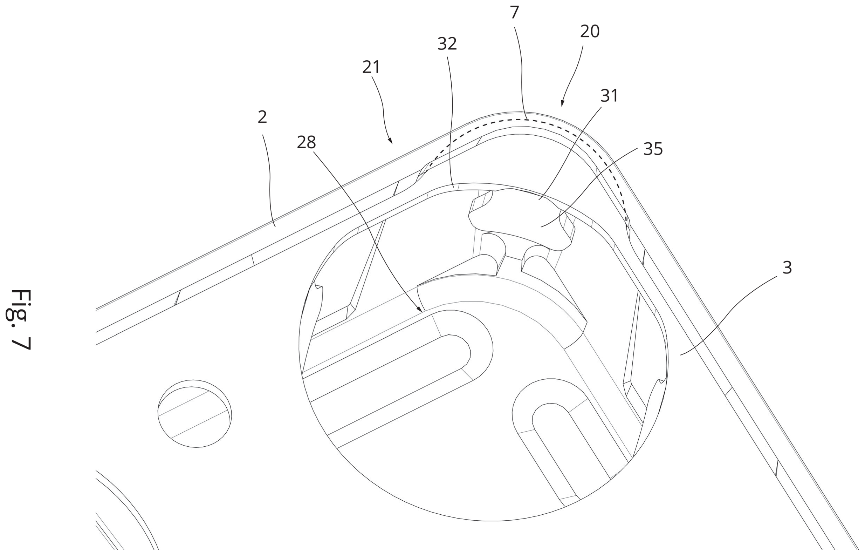

Inserts 2 for use in an assembly of the disclosure also comprise a series of openings 28 for receiving plants and/or plant pots 29. Fig. 6 shows an example of such insert with multiple plant pots 29 being received by multiple openings 28 in the insert 2. The shown embodiments of the openings 28 are provided with lips 30 that extend into the opening 28, for at least partly supporting the pots 29 that are received in the openings 28. The lips 30 are made integral with the insert and can be pivoted around the connection 31 with the periphery 32 of the opening 28 as shown by the bent lips 35 in Fig. 6 and Fig. 7.

Fig. 4 shows an exemplary embodiment of an insert 2 according to the disclosure, or at least for use in an assembly according to the disclosure, especially an insert as shown by way of example in fig. 1 - 3. This insert has a basically rectangular shape, with two long sides 39 and two short sides 40, defining four corners 7, each corner provided with a second connecting provisions 13. In this embodiment the connecting provisions 13 are shown as connecting elements 14 as described, with hook portions 15. However, these can also be formed differently, for example as openings 36 as shown in fig. 11. The length L₁ and L₂ of the long sides and short sides respectively correspond to the length L_{T1} and L_{T2} of the corresponding inside sides of the tray 1, such that edge portions of the insert will rest on the inside ledge 21 of the tray 1 when the insert 2 is coupled to the tray 1.

Furthermore the tray 2 has lengths L_{NP1}, L_{NP2}, which are the maximum length of the long and short sides respectively. For the shown embodiments, the lengths L_{NP1}, L_{NP2} are defined by the preferred standards set by NormPack, such as the NP200, NP300, and/or the NP400 series. In other embodiments for handling different goods in different industries, there may be different standards and therefore different maximum lengths L_{NP1}, L_{NP2} of the tray 2.For example, the lengths L_{NP1}, L_{NP2} could also be defined by optimizing the maximum amount of trays 2 that could fit on an auction trolley, or in a cardboard stacking box.

Fig. 5A-D shows, by way of example only, in a non-limiting manner, a series of embodiments of inserts 3 for use in an assembly 1 according to the disclosure. They all have the same rectangular shape with lengths L₁ and L₂ as described here before, such that they are interchangeable, but have different arrangements of openings 28.

Fig. 5A shows an insert according to fig. 4, wherein the openings 28 have a generally circular shape, with lips 30 connected to the periphery 32 of the openings 28. In these embodiments the lips 30 have an end 33 opposite the connection 31 to the periphery 32 of the opening 28. The end 33 is widening at least partly in a direction away from said periphery 32, and is provided with an end surface 34 which is curved concavely, which curvature may be chosen such that they all lay on the same circle, concentric with the periphery 32 of the opening 28. The lips 30 in these embodiments are shown having the shape of half a dog bone but can have different shapes and/or sizes, depending on their use. In fig. 5A eight openings 28 are arranged in a 3-2-3 configuration, wherein the lips 30 each have a main direction D extending at 45 degrees relative to the lengths L₁ and L₂. Further openings 41 are provided between the openings 28, reducing weight of the insert 3 and/or providing for example for entry and/or exit for water and/or air into and/or from the tray 2 and/or for gripping the insert.

Fig. 5B - D show further examples of a configuration for an insert 3 of the disclosure, similar to fig. 4 and 5A, but with other arrangements of openings 28. For example fig. 5B shows an embodiment with 12 smaller openings 28 in three rows of four openings 28, again each having four lips 30 arranged in a way similar to fig. 5A. Fig. 5C shows an embodiment with again 12 openings, like the embodiment of fig. 5B, but in which of halve of the openings 28 the position of the lips 30 has been rotated over 45 degrees. Fig. 5D shows an embodiment with 6 larger sized openings 28 in a 3x2 grid.

In embodiments the insert 2 is made of corrugated cardboard, but can also be made out of plastic, for example corrugated plastics, or solid cardboard. In some embodiments, the insert 2 is made of water repelling or resistant cardboard/plastic. The series of embodiments of insert 3 also show a varied sort of configurations. Each insert 3 is designed with second connecting provisions 13 for connecting the relevant insert 3 to the tray 2, wherein the insert 3 can have differently sized openings 28 and/or different opening configurations.

The embodiments of the insert 2 shown in Fig. 5A-D are all shown with identical sized openings 28 in a single insert 2, however an insert 2 can include multiple different sized openings 28 in a single insert 2. For example, an insert 2 could comprise multiple smaller sized openings 28 as shown in Fig. 5B and include multiple larger sized openings 28 as shown in Fig. 5D, thereby forming an insert 2 that can receive two different sized plant pots 29.

Similarly, all embodiments shown in Fig. 5A-D have openings 28 with four lips 30, but in other embodiments, there can be more or less lips 30. For example, as shown in Fig. 12, an opening 28 can be provided with three lips 30. It is also possible for an opening 28 to have no lips. Furthermore, the lips 30 are shown with a "dog bone" shape, but the lips 30 could also be shaped differently, such as a trapezoid.

In addition or alternatively, the insert 2 could be provided with perforated shapes, allowing the user to select what size openings 28 and shaped lips 30 are needed for handling the shipment of plants. For example, the openings 28 of the insert 2 as shown in Fig. 5D could comprise multiple perforated shapes that form multiple smaller circles, wherein the user can select what size opening 28 is required.

The openings 28 are shown in the embodiments to be circular, but the openings 28 can obviously be shaped differently to accommodate different shaped plants and/or plant pots. The openings 28 could be shaped to accommodate small paper plugs that are used for handling seedlings, or include small slits for handling individual plants, or be shaped like a square to accommodate square pots, or any other shape for that matter.

In embodiments inserts can be provided which are closed, i.e. without openings 28, which can be used for covering an internal volume of the tray. A user can then, if desired form openings 28, for example by puncturing and/or cutting the insert 3 with a knife or the like, in positions so required, prior to and/or after placing the insert om a tray 2.

Fig. 1, 2 , 6 and 7 show clearly that the bottom wall 5 of the tray 2 can be provided with indentations 35 that are designed for guiding and/or retaining water and/or for supporting pots 29 placed in and supported by the insert 3. The indentations can for example provide two or three or more levels of bottom portions relative to each other, by providing indentations having different depths, for example one or two depths. One of the levels above the lowest level can be provided with one or more drainage openings, such that below said level cq at a lever lower than said drainage opening water can be retained in the tray. Alternatively drainage openings can be provided at the lowest level, preventing water from being retained in the tray 2, or the tray can be devoid of drainage openings, such that no water can leak from the tray 2. It will be clear that combinations of such embodiments are also possible, for example for retaining or draining water at or from specific positions.

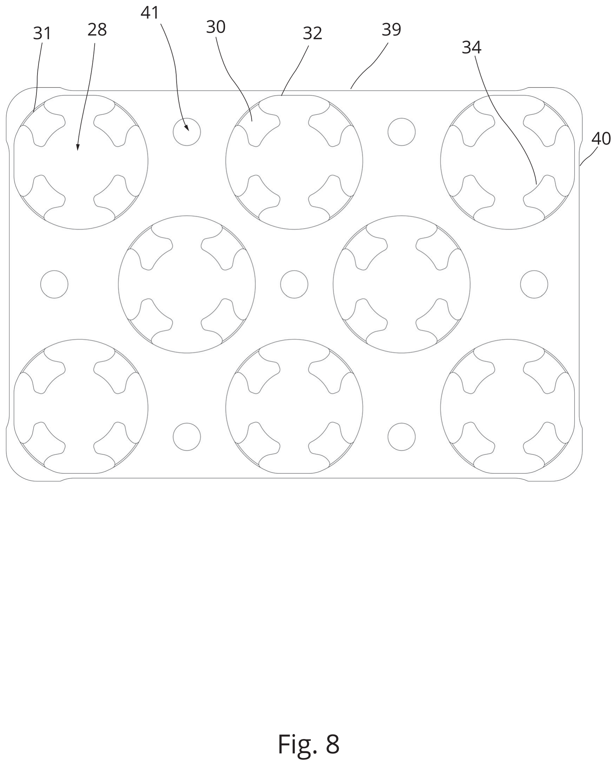

Fig. 7 and 8 show a perspective view of the corner showing an embodiment as disclosed in Fig. 3A wherein there is an undercut 27 forming an inner ledge portion 21 on which an edge portion 23 of the insert 3 can rest on. The corner 7 is provided with an undercut 27 facing inward, at a level of the inner ledge portion 21, such that the corner portion 23 of the insert 3 can fit in the undercut 27. Thereby achieving a cooperation between the corner portion 23 with the undercut 27 of corner 7, which prevent the corner 23 of the insert 3 from being moved upward from the inner ledge portion 21. The undercut 27 extends from the inner ledge portion 21 to a height that is substantially similar to the thickness of the insert 3, or in this embodiment similar to the thickness of the corner portion 23 of the insert 3 to allow for the undercut 27 to clamp on the corner portion 23. This embodiment of the connecting provisions can be combined with the first and second coupling elements 10, 13 as described in other embodiments.

Fig 9A, 9B and 10A, 10B show two embodiments of an insert 3 for use in an assembly 1 of the disclosure, with a collar 42, in a flat position as shown in Fig. 9A and Fig. 10A and in a set up position as shown in Fig. 9B and Fig. 10B. In these embodiments the insert 3 is formed or provided with a collar 42.

The collar 42 in Fig. 9A is embodied as a larger rectangle surrounding the insert 3 comprising optional fold lines 43, 44, 45. In Fig. 9B the collar 42 is in a setup position folded along fold line 43 around the upper rim 8, along upper rim 8A until it reaches the ledge 24b forming the periphery 26. From there, the collar 42 is folded along the fold line 44 to form an upward extending collar 46 that surrounds the potted plants 29 that are inserted in the tray 2. The collar 42 can be folded along fold line 43 such that the second connecting provisions 13, 14 maintain their shape for cooperating with the first connecting provisions 10, 11. In this embodiment, there are fold lines 45 in the corners 47. By folding the collars along fold lines 45, the upstanding collar 46 can sharply follow the periphery 26 of the tray 2. Optionally, additional external tools can be used to maintain the shape of the upstanding collar 46, i.e. using packing tape along the outside facing side 48 of the upstanding collar 46 along the periphery 26 of the tray 2 or by gluing the folded corner flaps to the sides of the collar 42, 46.

Fig. 10A shows another embodiment of an insert 3 with a collar 42 in a flat position and Fig. 10B shows the collar 42 folded and set up in an upwardly extending position. In this embodiment, the collar 42 does not have additional corners 47, instead the collar 42 comprises multiple extensions 49 with fold lines 43. The extensions 49 are folded along fold lines 43 to form a collar 46 that is in an upward extended position. In contrast to the embodiment shown in Fig. 9A and Fig. 9B, the extensions 49 are not connected to each other by corners 47 that are folded along fold lines 45. The extensions 49 can be connected using external materials such as packing tape, or the extensions 49 can be provided with connecting provisions 50, 51. In this embodiment there is a connecting provision 50 formed by an opening for cooperating with a connecting provision 51 of an adjacent extension 49. Here connecting provision 51 is embodied as a protrusion 51 that is received by the opening 50 for connecting and assembling the extensions 49 into an upwardly extending collar 46 that surrounds the potted plants 29.

In embodiments of an insert 3 with a collar 42, the collar can be made integral as part of the insert 3, or can be connected to the insert 3, for example by gluing, tape, welding or the like. Alternatively a collar 46 can be provided in a different manner, for example by wrapping around the tray 2, as known in the art.

In general a method for handling goods such as plants and/or plant pots 29 using a system 1 as described would follow the following steps, not necessarily in the order as described here below.

A series of the same or compatible trays is provided, for example trays having the same configuration, wherein all or some or none may have drainage openings as described. Each tray 2 is provided with an insert 3, wherein the second connecting provisions 13 of the insert 3 are connected to the first connecting provisions 10 of the tray 2. This results in the insert 3 spanning the opening of the tray 2, wherein the opening is substantially defined by the rim 8 of the tray 2. Potted plants 29 are then inserted into the openings 28 of the insert 3. In embodiments a collar can be provided along an outer periphery of the tray, enclosing the plants in said tray 2. Moreover, in embodiments water and/or water retaining material like oasis or gel may be added to the tray, and/or nutrition. The trays 2 with inserts 3 that have received plants 29 in the openings 29 are then transported to a destination. At the destination, the plants 29 are removed by retrieving the plants or pots 29 from the openings 28 of the insert 3. Then the inserts 3 are removed from the trays 2. The trays 2 are stacked and transported for reuse. The inserts 3 are also stacked or removed directly, for recycling or reuse. The trays and/or inserts may be cleaned or otherwise treated before recycling or reuse, for example prior to stacking.

The disclosure is by no means limited to the embodiments specifically shown as discussed. Many variants are possible within the concept as claimed in the appending claims. For example a tray can be formed through thermoforming, such as vacuum forming, but alternative can also be made through injection molding. The insert can be made of plastic and/or cardboard or any other suitable material for handling plants and/or plant pots. Furthermore the insert can also be made out of corrugated plastic and/or cardboard, and the insert could be made of water resistant and/or water repelling material. The first and second connecting provisions as shown can be interchanged in which for example the first connecting provision is embodied as an anchoring element and the second connecting provision is embodied as spaced apart portions defining an interspace therebetween for cooperating with the first connecting provision. The current configuration of openings provided on the insert are shown as identical but an insert can comprise multiple different sized openings for receiving multiple different sized plants and/or plant pots. The openings can be provided on the insert, but the insert could also be provided with perforations that can be pushed out or cut out for receiving plants and/or plant pots of varying sizes. In the embodiments, the dimensions of the tray are optimized for various NormPack standards, but the dimensions of the tray can also be optimized for various other standards or requirements, such as the dimensions of an auction trolley or a cardboard stacking box. The assembly is shown for handling plants and/or plant pots, but can also be used for handling plant stems, seedlings in paper plugs, food items and various other goods. In the embodiments shown the inserts are initially flat, but in embodiments they can be non-flat too, for example comprising rim portions extending around or foldable out from openings 28 in the insert. The connecting elements are disclosed as integral to container and/or inserts, but these could also be added to a tray or insert, for example by gluing, welding, taping or the like. The walls of the tray can be provided with profiling, for example reinforcement columns, vertical corrugations or the like, whereas rim portions could be increased in height, for example for stacking purposes or wrapping purposes.

Such variations are understood to be comprised within the scope of the invention as defined in the appended claims.

## Claims

1. System for handling plants and/or plant pots, comprising a tray and an insert, wherein the tray is made of plastic and comprises a bottom and two opposite first side walls and two opposite second side walls, first and second side walls meeting at four corners of the tray and defining an upper rim extending along edges of the side walls opposite the bottom wall, wherein the upper rim is provided with at least two first connecting provisions and the insert is provided with at least two second connecting provisions, wherein each first connecting provision is designed for cooperation with one of the second connecting provisions, such that cooperating first and second coupling provisions are prevented from becoming uncoupled by pulling at the insert in a direction parallel to a main plane of the bottom wall, inward to the tray.

2. System according to claim 1, wherein the first and second connecting provisions are designed such that the second connecting provisions can be pushed into and/or onto the first connecting provisions in a direction substantially perpendicular to the bottom of the tray.

3. System according to claim 1 or 2, wherein at least a number of the first connecting provisions comprises at least two spaced apart rim portions defining a rim opening there between, wherein relevant second connecting provisions are provided comprising an anchoring element fitting inside the rim opening, wherein the anchoring element has at least one hook portion for engaging an outward facing portion of at least one of the rim portions next to said rim opening.

4. System according to any one of the previous claims, wherein at least a number of the first connecting provisions comprises at least one upstanding rim portion, wherein relevant second connecting provisions comprise at least one opening fitting over the or each relevant upstanding rim portion, such that a portion of the insert bordering said at least one opening extends along an outside facing side of the upstanding rim portion.

5. System according to any one of the previous claims, wherein the tray is provided with first connecting provisions at least at two corners, preferably at least at each of the four corners of the tray, wherein the insert is provided with complementary second connecting provisions at corners of the insert.

6. System according to any one of the previous claims, wherein the tray is provided with at least one first connecting provision at each rim portion extending along opposite first side walls and/or at each rim portion extending along opposite second side walls, in positions spaced apart from the corners of the tray.

7. System according to any one of the previous claims, wherein the rim comprises an inner ledge portion at a side facing inward of the tray, for supporting an edge portion of an insert connected to the tray.

8. System according to any one of the previous claims, wherein the rim comprises an outer ledge portion at a side facing outward of the tray, defining at least part of a periphery, wherein in coupled condition the second connecting provisions rest at least partly on said outer ledge portion and preferably extend substantially inside the said periphery.

9. System according to any one of the preceding claims, wherein at least a number of said first connecting provisions comprises an undercut for retaining an edge portion of the insert.

10. System according to any one of the previous claims, wherein the insert comprises a series of openings for receiving plants and/or plant pots, wherein the openings in said series are provided with lips extending into the opening, for at least partly supporting the pots in said openings, wherein the lips are preferably made integral with the insert and/or are pivotally connected at a periphery of said opening.

11. System according to claim 10, wherein the lips are connected to the further insert at a periphery of the opening, preferably pivotally, wherein the lips have an end opposite said connection to the further insert which is widening and is provided with an end surface which is curved concavely.

12. System according to any one of the preceding claims, wherein the insert is made of plastic or cardboard, more specifically corrugated cardboard, preferably water repelling or water resistant cardboard or plastic.

13. System according to any one of the preceding claims, wherein the bottom wall of the tray is provided with indentations, which indentations are designed for guiding and/or retaining water.

14. System according to any one of the preceding claims, wherein a series of insert configurations is provided, each insert of said series of inserts being designed with said second connecting provisions for connecting the relevant insert to the tray, wherein inserts in said series comprise differently sized openings and/or different opening configurations.

15. System according to any one of the preceding claims, wherein the system further comprises a collar for surrounding plants in pots supported in the insert.

16. Method for handling plants and/or plant pots, wherein a series of assemblies according to any one of the previous claims is provided, wherein:
- each tray is provided with an insert by connecting the second connecting provisions of the insert with the first connecting provisions of the tray, such that the insert spans an opening of the tray, said opening substantially defined by the rim of the tray,
- plants and/or plant pots are inserted into the openings of the insert,
- the trays with inserts and plants and/or plant pots are transported to a destination;
- at said destination the plants and/or plant pots are removed by retrieving the plants and/or plant pots from the openings in the insert;
- the inserts are removed from the trays;
- the trays are stacked and the inserts are also stacked or are removed for recycling or reuse;
- the stacked trays are transported for reuse.
